(19) Europäisches Patentamt
European Patent Office
Office européen des brevets

(11) **EP 1 818 170 A1**

(12) **EUROPÄISCHE PATENTANMELDUNG**

(43) Veröffentlichungstag:
**15.08.2007 Patentblatt 2007/33**

(51) Int Cl.:
***B32B 27/00*** *(2006.01)* ***B32B 27/32*** *(2006.01)*
***B65D 65/40*** *(2006.01)*

(21) Anmeldenummer: **06020983.0**

(22) Anmeldetag: **06.10.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **25.10.2005 DE 102005051370**

(71) Anmelder: **Wipak Walsrode GmbH & Co. KG**
**29656 Walsrode (DE)**

(72) Erfinder:
• **Kaczmarek, Dirk, Dr.**
**28832 Achim (DE)**
• **Jacobsen, Sven, Dr.**
**29683 Bad Fallingbostel (DE)**
• **Kuckertz, Christian, Dr.**
**57462 Olpe (DE)**
• **Nieber, Kai**
**29664 Walsrode (DE)**

(74) Vertreter: **Bülle, Jan et al**
**Kutzenberger & Wolff**
**Patentanwaltssozietät**
**Theodor-Heuss-Ring 23**
**50668 Köln (DE)**

(54) **Thermoformbare Hochbarrierefolien für Kühlanwendungen**

(57)     Die Erfindung betrifft eine thermoformbare Mehrschichtfolie umfassend mindestens eine Polyolefinschicht basierend auf einem thermoplastischen Polyolefin, Olefin-Copolymerisat oder deren Mischung und mindestens eine Gasbarriereschicht, wobei die Sauerstoffdurchlässigkeit der Mehrschichtfolie höchstens 0,5 cm$^3$ m$^{-2}$ d$^{-1}$ bar$^{-1}$ beträgt.

**EP 1 818 170 A1**

**Beschreibung**

Die Erfindung betrifft eine thermoformbare Mehrschichtfolie, welche sich durch besondere Sauerstoff- und Wasserdampfbarriereeigenschaften auszeichnet. Die erfindungsgemäße Mehrschichtfolie ist insbesondere für den Einsatz in selbstkühlenden Transportbehältern geeignet.

Der Transport von Gütern, die aufgrund ihrer Wärmeempfindlichkeit bei einer Temperatur unterhalb der Umgebungstemperatur gelagert werden müssen, spielt eine bedeutende wirtschaftliche Rolle. Für zahlreiche Güter ist es erforderlich, während des Transportes eine lückenlose Kühlkette aufrechtzuerhalten. Als Beispiele können Nahrungsmittel, Feinchemikalien, biochemische bzw. molekularbiologische Erzeugnisse, aber auch Organe genannt werden.

Eine Einteilung der Behälter, welche zum Transport solcher Güter verwendet werden können, kann einerseits hinsichtlich des darin aufrechterhaltenen Temperaturbereichs oder der voraussichtlichen Dauer des Transports erfolgen, andererseits aber auch hinsichtlich der Größe. Behälter mit einem Füllvolumen von einigen m$^3$ werden üblicherweise mit Hilfe von strombetriebenen Kühlaggregaten gekühlt. Kleinere Behälter, d.h. solche mit einem Füllvolumen von wenigen Litern, werden beispielsweise mit Hilfe von Trockeneis oder Gelen gekühlt.

In jüngerer Zeit wurden als Alternative zu Trockeneis und Gelen Kühlsysteme entwickelt, welche auf der Verdampfung einer geeigneten Flüssigkeit bei reduziertem Druck basieren.

Die Wirkungsweise derartiger Kühlsysteme basiert auf dem Prinzip, dass der Umgebung durch die Verdampfung der Flüssigkeit Wärme (Verdampfungsenthalpie) entzogen wird, was zur Kühlung genutzt werden kann. Der Siedepunkt einer Flüssigkeit kann durch Druckverringerung abgesenkt werden. Ist der Druck gering genug, so siedet die Flüssigkeit und absorbiert dabei Wärme aus der Umgebung. Damit der Siedevorgang kontinuierlich verläuft, darf sich keine Dampfsättigung über der Flüssigkeit ausbilden. Daher ist es erforderlich, dass die verdampfte Flüssigkeit dem System kontinuierlich entzogen wird, ohne dass Luft von außen in das System eindringt. Handelt es sich bei der Flüssigkeit um Wasser, so kann der Wasserdampf beispielsweise mit Hilfe einer hygroskopischen Substanz aus dem System entfernt werden. In diesem Zusammenhang kann beispielsweise auf US 6,584,797, US 6,688,132 und US 6,701,724 verwiesen werden.

Damit solche Kühlsysteme zufriedenstellend funktionieren, ist es wünschenswert, dass der Unterdruck bei etwa $5 \times 10^{-3}$ bar oder weniger liegt. Dieser Unterdruck sollte vor dem Einsatz des Kühlsystems für eine angemessene Dauer der Lagerung, etwa für zwei Jahre, aufrechterhalten werden.

US 6,584,797 und US 6,688,132 schlagen vor, das Kühlsystem mit einer metallisierten Polyesterfolie zu umgeben und den so gebildeten Innenraum zu evakuieren. US 6,701,724 erwähnt als Alternative, das Kühlsystem in eine thermogeformte Mulde aus einem halbsteifen Kunststoff einzubringen und mit einer metallisierten Deckelfolie zu versiegeln, so dass ein geschlossener Raum entsteht, in dem der Unterdruck erzeugt und aufrechterhalten wird.

Materialien, welche zur Herstellung einer derartigen thermogeformten Mulde geeignet sind, müssen einerseits eine ausreichende Gas- und Wasserdampfdichtigkeit und andererseits eine ausreichende Thermoformbarkeit aufweisen. Diese Eigenschaften sind jedoch nur schwer miteinander in Einklang zu bringen.

So weisen die Materialien des Standes der Technik, deren Gas- und Wasserdampfdichtigkeit zur Aufrechterhaltung eines solchen Unterdrucks für eine längere Zeitspanne ausreichen würde, üblicherweise eine oder mehrere metallisierte Schichten auf, welche für die hohe Barrierewirkung verantwortlich sind (vgl. z.B. DE-A 10025305 und DE-A 10047043). Metallisierte Mehrschichtfolien haben jedoch den Nachteil, dass sie nicht thermoformbar sind, da der Metallfilm, welcher üblicherweise nur Schichtdicken von wenigen nm aufweist, durch die Thermoformung reißt und dadurch die Barrierewirkung verloren geht.

Hingegen zeigen herkömmliche, thermoformbare Mehrschichtfolien üblicherweise nicht die erforderliche Barrierewirkung, so dass sie das Vakuum nicht für eine ausreichende Dauer aufrechterhalten würden.

Es besteht daher ein Bedarf an thermoformbaren Mehrschichtfolien mit hoher Barrierewirkung, wobei die Barrierewirkung auch nach der Thermoformung im wesentlichen aufrechterhalten bleiben sollte.

Der Erfindung liegt somit die Aufgabe zugrunde, Mehrschichtfolien bereitzustellen, welche Vorteile gegenüber den Mehrschichtfolien des Standes der Technik aufweisen. Die Mehrschichtfolien sollten sich einerseits durch eine gute Thermoformbarkeit, insbesondere Tiefziehfähigkeit auf herkömmlichen Maschinen, andererseits durch eine hohe Gas- und Wasserdampfdichtigkeit auszeichnen, so dass sie zur Herstellung thermogeformter Mulden für die vorstehend beschriebenen Kühlsysteme geeignet sind.

Diese Aufgabe wird durch den Gegenstand der Patentansprüche gelöst. Es wurde überraschend gefunden, dass thermoformbare Mehrschichtfolien herstellbar sind, die vor und nach der Thermoformung eine Sauerstoffdurchlässigkeit von höchstens 0,5 cm$^3$ m$^{-2}$ d$^{-1}$ bar$^{-1}$ (bei 23°C und 75% rel. Feuchtigkeit) aufweisen.

Die Erfindung betrifft eine thermoformbare Mehrschichtfolie umfassend mindestens eine Polyolefinschicht basierend auf einem thermoplastischen Polyolefin, Olefin-Copolymerisat oder deren Mischung und mindestens eine Gasbarriereschicht, wobei die Sauerstoffdurchlässigkeit der Mehrschichtfolie höchstens 0,5 cm$^3$ m$^{-2}$ d$^{-1}$ bar$^{-1}$ beträgt (bei 23°C und 75% rel. Feuchtigkeit).

Die erfindungsgemäße Mehrschichtfolie ist thermoformbar, vorzugsweise tiefziehfähig. Der Begriff "tiefziehfähig" im Sinne der Erfindung definiert ein Material, welches unter Wärmeeinwirkung auf einer geeigneten Vorrichtung "tiefgezogen" werden kann, d.h. unter Einwirkung von Druck (und/oder Vakuum) beispielsweise zu einer Verpackungsmulde ausgebildet werden kann. Es handelt sich dabei um ein Material, welches thermoplastische Eigenschaften aufweist, so dass es im erwärmten Zustand verformbar ist, bei Raumtemperatur jedoch eine ausreichende Formstabilität aufweist, so dass auch nach Einbringen des Verpackungsguts im wesentlichen die durch Tiefziehen vorgegebene Form (z.B. Verpackungsmulde) erhalten bleibt. Damit die erfindungsgemäße Mehrschichtfolie thermoformbar ist, ist sie zumindest in den Bereichen, welche thermogeformt werden sollen, nicht metallisiert und weist in diesen Bereichen auch keine Beschichtung mit einem anorganischen Oxid, z.B. $Al_xO_y$ bzw. $SiO_x$ auf.

Die erfindungsgemäße Mehrschichtfolie umfasst bevorzugt n Gasbarriereschichten und n+1 Polyolefinschichten, wobei n = 1, 2, 3, 4 oder 5 sein kann. Grundsätzlich kann n auch größer als 5 sein, derartige Mehrschichtfolien sind jedoch erfindungsgemäß weniger bevorzugt.

Bevorzugt umfasst die erfindungsgemäße Mehrschichtfolie

- n Gasbarriereschichten $B_i$ mit i = 1 bis n; und
- n+1 Polyolefinschichten $P_i$ mit i = 1 bis n+1;

wobei

- n = 1, 2, 3, 4 oder 5;
- die Polyolefinschichten jeweils gleich oder verschieden auf einem thermoplastischen Polyolefin, Olefin-Copolymerisat oder deren Mischung basieren; und
- bei gegebenem i die Gasbarriereschicht $B_i$ zwischen den Polyolefinschichten $P_i$ und $P_{i+1}$ angeordnet ist.

Ist n = 1, so umfasst die erfindungsgemäße Mehrschichtfolie eine Gasbarriereschicht $B_1$ und zwei Polyolefinschichten $P_1$ und $P_2$, wobei die Gasbarriereschicht $B_1$ zwischen den beiden Polyolefinschichten $P_1$ und $P_2$ angeordnet ist $(P_1/B_1/P_2)$. Ist n = 2, so umfasst die erfindungsgemäße Mehrschichtfolie zwei Gasbarriereschichten $B_1$ und $B_2$ und drei Polyolefinschichten $P_1$, $P_2$ und $P_3$, wobei die Gasbarriereschicht $B_1$ zwischen den beiden Polyolefinschichten $P_1$ und $P_2$ und die Gasbarriereschicht $B_2$ zwischen den beiden Polyolefinschichten $P_2$ und $P_3$ angeordnet ist $(P_1/B_1/P_2/B_2/P_3)$. Für n = 3 ergibt sich entsprechend die Schichtabfolge $P_1/B_1/P_2/B_2/P_3/B_3/P_4$ und für n = 4 die Schichtabfolge $P_1/B_1/P_2/B_2/P_3/B_3/P_4/B_4/P_5$.

Zum Zwecke der Beschreibung werden zwei innerhalb der Schichtabfolge aufeinanderfolgende Schichten durch "/" voneinander getrennt, wobei die Schichten dabei nicht zwangsläufig unmittelbar aneinander angrenzen, d.h. einander berühren müssen - es ist auch möglich, dass eine Schicht oder mehrere Schichten dazwischen eingeschoben sind. Die Bezeichnung **"$P_1/B_1/P_2/B_2/P_3$"** umfasst somit beispielsweise auch eine Mehrschichtfolie $P_1/B_1/P_2/X/Y/B_2/P_3$, wobei **"X"** und **"Y"** für weitere Schichten steht, beispielsweise für zwei zusätzliche, gleich oder verschieden auf einem Polyolefin oder Olefin-Copolymerisat basierende Schichten.

Die Polyolefinschichten der erfindungsgemäßen Mehrschichtfolie basieren gleich oder verschieden auf einem thermoplastischen Polyolefin, Olefin-Copolymerisat oder deren Mischung.

Polyolefine und Olefin-Copolymerisate im Sinne der Beschreibung sind bevorzugt ausgewählt aus der Gruppe bestehend aus PE (insbesondere LDPE, LLDPE, HDPE oder mPE), PP, PI, PB, EAA, EMAA, EVA, EPC und I, bzw. deren Copolymerisaten.

Mit "PE" wird Polyethylen, mit "PP" Polypropylen bezeichnet. Das Polypropylen kann ataktisch, isotaktisch oder syndiotaktisch sein. Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Eine Unterform von LDPE bildet lineares Polyethylen geringer Dichte (LLDPE), welches neben Ethylen als Comonomer ein oder mehrere α-Olefine mit mehr als 3 Kohlenstoffatomen enthält, z.B. But-1-en, Hex-1-en, 4-Methyl-pent-1-en und Oct-1-en. Aus der Copolymerisation der genannten Monomere ergibt sich die für LLDPE typische molekulare Struktur, die durch eine lineare Hauptkette mit daran befindlichen Seitenketten gekennzeichnet ist. Die Dichte variiert zwischen 0,86 und 0,94 g/cm³. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann. Mit "mPE" wird ein Ethylen-Copolymerisat bezeichnet, das mittels Metallocen-Katalysatoren polymerisiert wurde. Als Comonomer wird vorzugsweise ein α-Olefin mit 4 oder mehr Kohlenstoffatomen eingesetzt. Die Dichte liegt vorzugsweise zwischen 0,88 und 0,93 g/cm³. Die Dispersität $M_w/M_n$ ist bevorzugt kleiner 3,5, vorzugsweise kleiner 3,0. Der Schmelzflussindex MFR von auf Polyethylen basierenden Polymeren liegt bevorzugt zwischen 0,3 und 15 g/10 min (bei 190°C/2,16 kg Last, gemessen nach DIN EN ISO 1133). Der Schmelzflussindex MFR von auf Polypropylen basierenden Polymeren liegt bevorzugt zwischen 0,3 und 30 g/10 min (bei 230°C/2,16 kg Last, gemessen nach DIN EN ISO 1133).

Mit "PI" wird Polyisobutylen, mit "PB" Polybutylen bezeichnet.

Mit "EAA" werden Copolymerisate aus Ethylen und Acrylsäure und mit "EMAA" Copolymerisate aus Ethylen und Methacrylsäure bezeichnet. Der Ethylengehalt liegt jeweils vorzugsweise zwischen 60 und 99 mol.-%.

Mit "EVA" wird ein Copolymerisat aus Ethylen und Vinylacetat bezeichnet. Der Ethylengehalt liegt vorzugsweise zwischen 60 und 99 mol.-%.

Als "EPC" werden Ethylen-Propylen-Copolymerisate mit 1-10 mol.-% Ethylen bezeichnet, wobei das Ethylen vorzugsweise statistisch verteilt im Molekül vorliegt.

Mit "I" werden auf Olefinen basierende Copolymerisate bezeichnet, deren Moleküle über Ionenbindungen vernetzt sind (Ionomere). Die ionische Bindung erfolgt reversibel, was ein Lösen der ionischen Bindung bei üblichen Verarbeitungstemperaturen (ca. 180-290°C) und eine erneute Ausbildung der ionischen Bindung in der Abkühlphase bewirkt. Üblicherweise werden als Polymere Copolymerisate aus Ethylen mit Acrylsäuren eingesetzt, die z.B. über Zinkionen miteinander vernetzt sind, z.B. Surlyn®.

In einer bevorzugten Ausführungsform der erfindungsgemäßen Mehrschichtfolie basieren alle Polyolefinschichten gleich oder verschieden auf PE, insbesondere auf einem PE ausgewählt aus der Gruppe bestehend aus LDPE, LLDPE, HDPE und mPE.

Die Sauerstoffdurchlässigkeit der erfindungsgemäßen Mehrschichtfolie beträgt höchstens $0{,}5 \, cm^3 \, m^{-2} \, d^{-1} \, bar^{-1}$, bevorzugt höchstens 0,45 oder 0,40, $cm^3 \, m^{-2} \, d^{-1} \, bar^{-1}$, bevorzugter höchstens 0,35, 0,30 oder $0{,}25 \, cm^3 \, m^{-2} \, d^{-1} \, bar^{-1}$, noch bevorzugter höchstens 0,20, 0,15 oder $0{,}10 \, cm^3 \, m^{-2} \, d^{-1} \, bar^{-1}$, am bevorzugtesten höchstens 0,09, 0,08 oder 0,07 $cm^3 \, m^{-2} \, d^{-1} \, bar^{-1}$ und insbesondere höchstens 0,06, 0,05 oder $0{,}04 \, cm^3 \, m^{-2} \, d^{-1} \, bar^{-1}$ (jeweils bei 23°C und 75% rel. Feuchtigkeit). Geeignete Methoden zur Bestimmung der Sauerstoffdurchlässigkeit sind dem Fachmann bekannt. Erfindungsgemäß bevorzugt erfolgt die Bestimmung der Sauerstoffdurchlässigkeit gemäß DIN ISO 53 380.

In einer bevorzugten Ausführungsform der erfindungsgemäßen Mehrschichtfolie ist nach Thermoformung durch Tiefziehen bei einem Tiefziehverhältnis von 1 : 3 die Sauerstoffdurchlässigkeit in den tiefgezogenen Bereichen um höchstens 25%, bevorzugter um höchstens 20%, noch bevorzugter um höchstens 15%, am bevorzugtesten um höchstens 10% und insbesondere um höchstens 5% größer als in den nicht-tiefgezogenen Bereichen.

Erfindungsgemäß bevorzugt beträgt die Wasserdampfdurchlässigkeit der erfindungsgemäßen Mehrschichtfolie ebenfalls höchstens die vorstehend genannten Werte, wobei die Wasserdampfdurchlässigkeit vorzugsweise gemäß DIN ISO 53 122 bestimmt wird.

Die erfindungsgemäße Mehrschichtfolie weist n Gasbarriereschichten auf. Dem Fachmann sind geeignete Polymere bekannt, welche durch eine Gasbarrierewirkung gekennzeichnet sind. Beispiele sind Ethylen-Vinylalkohol-Copolymerisate (EVOH), Polyvinylidenchlorid (PVDC) und Vinylidenchlorid-Copolymerisat, vorzugsweise mit einem Anteil des Vinylidenchlorids von 80% oder mehr, ggf. auch als Blend mit anderen Polymeren, wie EVA. Bevorzugt basieren die Gasbarriereschichten jeweils gleich oder verschieden auf Ethylen-Vinylalkohol-Copolymerisat.

Die hohe Gasbarrierewirkung, insbesondere die geringe Sauerstoffdurchlässigkeit der erfindungsgemäßen Mehrschichtfolie ist insbesondere auf die Gasbarriereschichten zurückzuführen. In einer bevorzugten Ausführungsform der erfindungsgemäßen Mehrschichtfolie ist n > 1 und die Summe der Schichtdicken der Gasbarriereschichten beträgt mindestens 20, 22 oder 24 $\mu$m, bevorzugter mindestens 26, 28 oder 30 $\mu$m, noch bevorzugter mindestens 32, 34 oder 36 $\mu$m, am bevorzugtesten mindestens 38, 40 oder 42 $\mu$m und insbesondere mindestens 44, 46 oder 48 $\mu$m.

Besonders bevorzugt ist n = 2 oder 3, so dass die erfindungsgemäße Mehrschichtfolie zwei Gasbarriereschichten $B_1$ und $B_2$ bzw. drei Gasbarriereschichten $B_1$, $B_2$ und $B_3$ aufweist, jeweils bevorzugt basierend auf EVOH.

Es wurde überraschend gefunden, dass die Thermoformbarkeit der erfindungsgemäßen Mehrschichtfolie verbessert werden kann, wenn die Gesamtschichtdicke der Gasbarriereschichten nicht in einer einzelnen Schicht vereint wird, sondern auf mehrere Gasbarriereschichten verteilt wird. Die Gesamtschichtdicke der Gasbarriereschichten, d.h. die Summe aller Schichtdicken der einzelnen Gasbarriereschichten, kann gleichmäßig oder ungleichmäßig über die einzelnen Gasbarriereschichten verteilt sein. Bevorzugt weicht bei gegebenem i die Schichtdicke der Gasbarriereschicht $B_i$ um höchstens 5 $\mu$m, bevorzugter höchstens 4 $\mu$m, noch bevorzugter höchstens 3 $\mu$m, am bevorzugtesten höchstens 2 $\mu$m und insbesondere höchstens 1 $\mu$m von der Schichtdicke der Gasbarriereschicht $B_{i+1}$ ab.

In einer bevorzugten Ausführungsform der erfindungsgemäßen Mehrschichtfolie weist sie eine Schutzschicht S auf, welche eine der beiden Oberflächenschichten der Mehrschichtfolie bildet, wobei die Schutzschicht S

- auf einem thermoplastischen Polyolefin, Olefin-Copolymerisat oder deren Mischung basiert; und/oder
- eine Schichtdicke von mindestens 100 $\mu$m, bevorzugter mindestens 120 $\mu$m, noch bevorzugter mindestens 140 $\mu$m, am bevorzugtesten mindestens 150 $\mu$m und insbesondere mindestens 160 $\mu$m aufweist; und/oder
- einen Füllstoff enthält.

Als Polyolefin, Olefin-Copolymerisat oder deren Mischung kommen grundsätzlich die gleichen Polymere in Frage, welche vorstehend im Zusammenhang mit den Polyolefinschichten erwähnt wurden. Bevorzugt basiert die Schutzschicht S auf PE, insbesondere einem PE ausgewählt aus der Gruppe bestehend aus LDPE, LLDPE, HDPE und mPE. Die Schutzschicht S hat den Vorteil, dass sie die Wasserdampfdurchlässigkeit der Mehrschichtfolie weiter verringert, die Gasbarriereschicht(en) mechanisch stabilisiert und auch der Mehrschichtfolie im tiefgezogenen Zustand zusätzliche mechanische Stabilität und Rigidität verleiht. Bevorzugt wird die Schutzschicht S auf die Polyolefinschicht $P_1$ oder auf die Polyolefinschicht $P_{n+1}$ aufkaschiert und bildet diejenige Oberflächenschicht der Mehrschichtfolie, von der zu erwarten ist, dass sie später einer erhöhten mechanischen äußeren Einwirkung ausgesetzt sein wird. Dabei kann die Kaschierung sowohl mit lösemittelfreien als auch mit lösemittelhaltigen Kaschiermethoden erfolgen.

Bevorzugt enthält die Schutzschicht S einen Füllstoff. Geeignete Füllstoffe sind dem Fachmann bekannt. Bevorzugt handelt es sich bei dem Füllstoff um ein Farbpigment, vorzugsweise um $TiO_2$.

In einer bevorzugten Ausführungsform weist die erfindungsgemäße Mehrschichtfolie zwei gleiche oder verschiedene Schutzschichten S auf, welche beide Oberflächenschichten der erfindungsgemäßen Mehrschichtfolie bilden. In dieser Ausführungsform ist es bevorzugt, dass zumindest eine der beiden Schutzschichten S heißsiegelbar ist. In diesem Fall enthält die heißsiegelbare Schutzschicht S bevorzugt keinen Füllstoff.

In einer anderen bevorzugten Ausführungsform bildet die Polyolefinschicht $P_1$ oder die Polyolefinschicht $P_{n+1}$ eine Oberflächenschicht der Mehrschichtfolie. Weist die Mehrschichtfolie eine Schutzschicht S auf, welche die eine der beiden Oberflächenschichten der Mehrschichtfolie bildet, so bildet die Polyolefinschicht $P_1$ bzw. die Polyolefinschicht $P_{n+1}$ vorzugsweise die andere der beiden Oberflächenschichten der Mehrschichtfolie.

Bevorzugt ist diese andere der beiden Oberflächenschichten heißsiegelbar. Der Siegelvorgang wird beispielsweise in Hernandez/Selke/ Culter: Plastics Packaging, Carl Hanser Verlag, München, 2000 beschrieben.

Erfindungsgemäß bevorzugt basiert die heißsiegelbare Polyolefinschicht $P_1$ bzw. $P_{n+1}$ auf wenigstens einem Polyolefin ausgewählt aus der Gruppe bestehend aus mPE, HDPE, LDPE, LLDPE, EVA, EAA, I (bevorzugt Surlyn®, z.B. mit Zinkionen), PP, vorzugsweise homo-PP, und Propylen-Copolymerisat, oder deren Mischung. Die Siegeltemperaturen liegen vorzugsweise im Bereich von 100°C bis 164°C. Die Schmelztemperatur beträgt vorzugsweise 90 bis 164°C, besonders bevorzugt 95°C bis 130 °C. Die heißsiegelbare Polyolefinschicht $P_1$ bzw. $P_{n+1}$ kann mit den üblichen Hilfsstoffen wie Antistatika, Gleitmitteln, Slipmitteln, Antiblockmitteln, Antifogmitteln und/oder Abstandshaltern ausgerüstet werden.

In einer bevorzugten Ausführungsform umfasst die erfindungsgemäße Mehrschichtfolie n Zwischenschichten $Z_i$ mit i = 1 bis n, und n Zwischenschichten $Z_i'$ mit i = 1 bis n, wobei bei gegebenem i die Gasbarriereschicht $B_i$ auf ihrer der Polyolefinschicht $P_i$ zugewandten Seite unmittelbar an die Zwischenschicht $Z_i$ und auf ihrer der Polyolefinschicht $P_{i+1}$ zugewandten Seite unmittelbar an die Zwischenschicht $Z_i'$ angrenzt. Für n = 1 ergibt sich somit die Schichtabfolge $P_1/Z_1/B_1/Z_1'/P_2$, für n = 2 ergibt sich die Schichtabfolge $P_1/Z_1/B_1/Z_1'/P_2/Z_2/B_2/Z_2'/P_3$ und für n = 3 ergibt sich die Schichtabfolge $P_1/Z_1/B_1/Z_1'/P_2/Z_2/B_2/Z_2'/P_3/Z_3/B_3/Z_3'/P_4$.

Die Zwischenschichten schützen die Gasbarriereschichten, so dass es durch die Thermoformung nicht zu einer Schädigung und damit einhergehenden drastischen Verringerung der Barrierewirkung kommt.

Bevorzugt basieren die Zwischenschichten jeweils gleich oder verschieden auf einem Polyamid, Copolyamid oder deren Mischung. Polyamide (PA) und Copolyamide (CoPA) im Sinne der Beschreibung sind bevorzugt aliphatisch oder (teil-)aromatisch. Bevorzugt ist das Polyamid aliphatisch. Bevorzugt weist das Polyamid oder Copolyamid einen Schmelzpunkt im Bereich von 160 bis 240°C, bevorzugter 170 bis 220°C auf. Bevorzugt ist das Polyamid oder Copolyamid ausgewählt aus der Gruppe bestehend aus PA 4, PA 6, PA 7, PA 8, PA 9, PA 10, PA 11, PA 12, PA 4,2, PA 6,6, PA 6,8, PA 6,9, PA 6,10, PA 6,12, PA 7,7, PA 8,8, PA 9,9, PA 10,9, PA 12,12, PA 6/6,6, PA 6,6/6, PA 6,2/6,2, und PA 6,6/6,9/6. PA 6 ist besonders bevorzugt. Eine ausführliche Beschreibung von PA und CoPA findet man im Kunststoff-Handbuch Band VI, Polyamide, Carl Hanser Verlag München, 1966; und Melvin I. Kohan, Nylon Plastics Handbook, Carl Hanser Verlag München, 1995, auf deren Inhalt vollumfänglich Bezug genommen wird.

Die ggf. vorhandenen Zwischenschichten weisen bevorzugt dieselbe oder verschiedene Schichtdicken von 1,0 bis 25 $\mu$m auf, bevorzugter 1,2 bis 15 $\mu$m, noch bevorzugter 1,5 bis 10 $\mu$m, am bevorzugtesten 1,8 bis 7,5 $\mu$m und insbesondere von 2,0 bis 5,0 $\mu$m.

In einer bevorzugten Ausführungsform der erfindungsgemäßen Mehrschichtfolie liegt bei gegebenem i das Verhältnis der Schichtdicke der Zwischenschicht $Z_i$ und/oder der Zwischenschicht $Z_i'$ zur Schichtdicke der Gasbarriereschicht $B_i$ jeweils im Bereich von 3:1 bis 1:7, bevorzugter 2,5:1 bis 1:6, noch bevorzugter 2:1 bis 1:5, am bevorzugtesten 1,5:1 bis 1:4 und insbesondere 1:1 bis 1:3.

Weist die erfindungsgemäße Mehrschichtfolie die vorstehend definierten Zwischenschichten $Z_i$ und $Z_i'$ auf, so umfasst sie bevorzugt ferner n Haftvermittlerschichten $H_i$ mit i = 1 bis n und n Haftvermittlerschichten $H_i'$ mit i = 1 bis n, wobei bei gegebenem i die Haftvermittlerschicht $H_i$ zwischen der Polyolefinschicht $P_i$ und der Zwischenschicht $Z_i$ und die Haftvermittlerschicht $H_i'$ zwischen der Zwischenschicht $Z_i'$ und der Polyolefinschicht $P_{i+1}$ angeordnet ist.

Geeignete Haftvermittler sind dem Fachmann bekannt. Bevorzugt basieren die Haftvermittlerschichten gleich oder verschieden auf einer Mischung aus Polyolefinen und/oder Olefin-Copolymerisaten, vorzugsweise ausgewählt aus der Gruppe bestehend aus PE, wie LDPE oder HDPE, PP, Maleinsäureanhydrid-Copolymerisat (MAH-Copolymerisat, aufgepfropft) und/oder Ethylen-Vinylacetat-Copolymerisat. Bevorzugt sind anhydridmodifiziertes PE, Säurecopolymere des Ethylens, säuremodifiziertes Ethylenvinylacetat, säuremodifiziertes Ethylen(meth)acrylat, anhydridmodifiziertes Ethylen(meth)acrylat, anhydridmodifiziertes Ethylen-Vinylacetat, säure-/acrylatmodifiziertes Ethylenvinylacetat und ein Polymerblend enthaltend mindestens eines der vorstehend genannten Polymere. MAH-Copolymerisate sind besonders bevorzugt.

Die ggf. vorhandenen Haftvermittlerschichten weisen vorzugsweise dieselbe oder verschiedene Schichtdicken von 1,0 bis 25 $\mu$m auf, bevorzugter von 1,2 bis 15 $\mu$m, noch bevorzugter von 1,5 bis 10 $\mu$m, am bevorzugtesten von 1,8 bis 7,5 $\mu$m und insbesondere von 2,0 bis 5,0 $\mu$m.

In einer besonders bevorzugten Ausführungsform umfasst die erfindungsgemäße Mehrschichtfolie eine der folgenden Schichtabfolgen:

für **n=1**:
$P_1/Z_1/B_1/Z_1'/P_2$;
$S/P_1/Z_1/B_1/Z_1'/P_2$;
$P_1/H_1/Z_1/B_1/Z_1'/H_1'/P_2$; oder
$S/P_1/H_1/Z_1/B_1/Z_1'/H_1'/P_2$;
für n = 2:
$P_1/Z_1/B_1/Z_1'/P_2/Z_2/B_2/Z_2'/P_3$;
$S/P_1/Z_1/B_1/Z_1'/P_2/Z_2/B_2/Z_2'/P_3$;
$P_1/H_1/Z_1/B_1/Z_1'/H_1'/P_2/H_2/Z_2/B_2/Z_2'/H_2'/P_3$; oder
$S/P_1/H_1/Z_1/B_1/Z_1-/H_1'/P_2/H_2/Z_2/B_2/Z_2'-/H_2'/P_3$.
für n = 3:
$P_1/Z_1/B_1/Z_1'/P_2/Z_2/B_2/Z_2'/P_3/Z_3/B_3/Z_3'/P_4$;
$S/P_1/Z_1/B_1/Z_1'/P_2/Z_2/B_2/Z_2'/P_3/Z_3/B_3/Z_3'/P_4$;
$P_1/H_1/Z_1/B_1/Z_1'/H_1'/P_2/H_2/Z_2/B_2/Z_2'/H_2'/P_3/H_3/Z_3/B_3/Z_3'/H_3'/P_4$ oder
$S/P_1/H_1/Z_1/B_1/Z_1'/H_1'/P_2/H_2/Z_2/B_2/Z_2'/H_2'/P_3/H_3/Z_3/B_3/Z_3'/H_3'/P_4$.

In einer bevorzugten Ausführungsform weist die erfindungsgemäße Mehrschichtfolie einen Elastizitätsmodul aus dem Zugversuch (Quotient aus der Spannungsdifferenz und dem entsprechenden Dehnungsunterschied bei 0,05 und 0,25 % Dehnung) von mindestens 250 MPa auf, bevorzugter mindestens 400 MPa, noch bevorzugter mindestens 500 MPa, am bevorzugtesten mindestens 600 MPa und insbesondere mindestens 650 MPa. Bei 2% Dehnung beträgt die Spannung vorzugsweise mindestens 5 MPa, bevorzugter mindestens 7,5 MPa und insbesondere mindestens 10 MPa. Bei 5% Dehnung beträgt die Spannung vorzugsweise mindestens 8 MPa, bevorzugter mindestens 12 MPa und insbesondere mindestens 16 MPa. Die Bruchspannung beträgt bevorzugt mindestens 20 MPa, bevorzugter mindestens 30 MPa und insbesondere mindestens 35 MPa. Die Bruchdehnung beträgt bevorzugt mindestens 400%, bevorzugter mindestens 500% und insbesondere mindestens 550%. Die vorstehenden Messwerte werden bevorzugt entsprechend DIN EN ISO 527 Teil 1+3 bestimmt.

Bevorzugt weist die erfindungsgemäße Mehrschichtfolie eine Gesamtschichtdicke von mindestens 150 $\mu$m, bevorzugter mindestens 200 $\mu$m, noch bevorzugter mindestens 250 $\mu$m, am bevorzugtesten mindestens 300 $\mu$m und insbesondere mindestens 350 $\mu$m auf.

Die erfindungsgemäße Mehrschichtfolie kann bedruckt werden, wobei mindestens eine Schicht der Mehrschichtfolie bedruckt oder durch die Zugabe von Additiven wie organischen oder anorganischen Farbstoffen und Pigmenten eingefärbt werden kann.

Die erfindungsgemäße Mehrschichtfolie eignet sich vorzugsweise zur Verwendung bei Temperaturen im Bereich von -80°C bis +130°C, bevorzugter -65°C bis + 110°C und noch bevorzugter -50°C bis +90°C.

Die erfindungsgemäße Mehrschichtfolie kann mit Hilfe herkömmlicher Verfahren hergestellt werden. Die Herstellung der erfindungsgemäßen Mehrschichtfolie kann als Teilschritt ein Flachfolien-, Blas-, Beschichtungs-, (Co-)Extrusions-, oder entsprechendes Kaschier- oder Beschichtungsverfahren umfassen. Auch Kombinationen dieser Verfahren sind möglich.

Die einzelnen Schichten der erfindungsgemäßen Mehrschichtfolien werden vorzugsweise weder rein sequentiell, noch in einem einzigen Schritt zusammengefügt. Erfindungsgemäß bevorzugt erfolgt die Herstellung der Mehrschichtfolien durch ein konsekutives Verfahren, bei dem zunächst ein Mehrschichtenverbund hergestellt wird, welcher nur einen Teil der Schichten der erfindungsgemäßen Mehrschichtfolie umfasst. Bevorzugt umfasst dieser Mehrschichtenverbund nur eine der Gasbarriereschichten.

Ist beispielsweise n = 2 und umfasst die erfindungsgemäße Mehrschichtfolie die Schichtabfolge $P_1/Z_1/B_1/Z_1'/P_2/Z_2/B_2/Z_2'/P_3$, so werden bevorzugt zunächst zwei Mehrschichtenverbunde $P_1/Z_1/B_1/Z_1'/P_2$ getrennt hergestellt und dann zusammengefügt. In einer besonders bevorzugten Ausführungsform sind diese beiden Mehrschichtenverbunde identisch.

Die vorstehend genannten Mehrschichtenverbunde werden vorzugsweise durch übliche Flachfolien-Coextrusion oder durch Folienblas-Coextrusion hergestellt. Derartige Verfahren sind dem Fachmann bekannt. In diesem Zusammenhang kann beispielsweise auf A.L. Brody, K.S. Marsh, The Wiley Encyclopedia of Packaging Technology, Wiley-Interscience, 2 edition (1997); W. Soroka, Fumdamentals of Packaging Technology, Institute of Packaging Professionals (1995); J. Nentwig, Kunststoff-Folien, Hanser Fachbuch (2000); und S.E.M. Selke, Understanding Plastics Packaging Technology (Hanser Understanding Books), Hanser Gardner Publications (1997) verwiesen werden.

Die Zusammenfügung der beiden Verbunde erfolgt bevorzugt sofort nach der Coextrusion, d.h. im noch erwärmten Zustand. Basieren die zusammengefügten Oberflächenschichten der beiden Verbunde auf dem gleichen oder einem chemisch verwandten (Co-)Polymer, so reicht üblicherweise die Restwärme von der Coextrusion dazu aus, eine ausreichende Verbundhaftung zu erreichen.

Das Zusammenfügen von zwei identischen Mehrschichtverbunden des Typs $P_1/Z_1/B_1/Z_1'/P_2$ führt zu einem Verbund $P_1/Z_1/B_1/Z_1'/(P_2-P_2)/Z_2/B_2/Z_2'/P_3$. Da die zusammengefügten Oberflächenschichten auf denselben Polymeren basieren, entsteht durch das Zusammenfügen eine einheitliche Schicht, was im vorstehenden Verbund durch die Schreibweise **"$(P_2-P_2)$"** zum Ausdruck gebracht wird. Basieren die zusammengefügten Schichten hingegen auf unterschiedlichen Polymeren, so kann der resultierende Verbund zur Einhaltung der erfindungsgemäßen Definition (Indizierung der einzelnen Schichten) geschrieben werden als $P_1/Z_1/B_1/Z_1'/P_2/X/Z_2/B_2/Z_2'/P_3$, wobei $P_2$ die zusammengefügte Polyolefinschicht des einen Mehrschichtverbundes und $X$ die zusammengefügte Polyolefinschicht des anderen Mehrschichtenverbundes ist.

Grundsätzlich können die Mehrschichtenverbunde jedoch auch durch andere Methoden zusammengefügt werden, beispielsweise mit Hilfe einer durch Extrusionskaschierung zwischen die beiden Mehrschichtenverbunde extrudierte Verbindungsschicht.

Ein weiterer Aspekt der Erfindung betrifft eine Verpackungsmulde umfassend eine vorstehend beschriebene Mehrschichtfolie, wobei diese thermogeformt, vorzugsweise tiefgezogen ist. Vorzugsweise weist die erfindungsgemäße Verpackungsmulde sowohl in den thermogeformten Bereichen als auch in den nicht-thermogeformten Bereichen eine Sauerstoffdurchlässigkeit von höchstens 0,5 cm$^3$ m$^{-2}$ d$^{-1}$ bar$^{-1}$, bevorzugt höchstens 0,45 oder 0,40, cm$^3$ m$^{-2}$ d$^{-1}$ bar$^{-1}$, bevorzugter höchstens 0,35, 0,30 oder 0,25 cm$^3$ m$^{-2}$ d$^{-1}$ bar$^{-1}$, noch bevorzugter höchstens 0,20, 0,15 oder 0,10 cm$^3$ m$^{-2}$ d$^{-1}$ bar$^{-1}$, am bevorzugtesten höchstens 0,09, 0,08 oder 0,07 cm$^3$ m$^{-2}$ d$^{-1}$ bar$^{-1}$ und insbesondere höchstens 0,06, 0,05 oder 0,04 cm$^3$ m$^{-2}$ d$^{-1}$ bar$^{-1}$ (jeweils bei 23°C und 75% rel. Feuchtigkeit). Geeignete Methoden zur Bestimmung der Sauerstoffdurchlässigkeit sind dem Fachmann bekannt. Erfindungsgemäß bevorzugt erfolgt die Bestimmung der Sauerstoffdurchlässigkeit gemäß DIN ISO 53 380.

Geeignete Vorrichtungen zum Thermoformen, beispielsweise zum Tiefziehen sind dem Fachmann bekannt.

Ein weiterer Aspekt der Erfindung betrifft die Verwendung der erfindungsgemäßen Verpackungsmulde zum Verpacken eines Verpackungsguts.

Ein weiterer Aspekt der Erfindung betrifft ein Verfahren zur Herstellung einer Verpackungsmulde aus der vorstehend beschriebenen, erfindungsgemäßen, thermoformbaren Mehrschichtfolie. Das erfindungsgemäße Verfahren umfasst den Schritt des Thermoformens, vorzugsweise des Tiefziehens der Mehrschichtfolie. Die Erfindung betrifft auch thermogeformte Verpackungsmulden, welche nach diesem Verfahren erhältlich sind, und die Verwendung der thermoformbaren Mehrschichtfolie zur Herstellung einer Verpackungsmulde.

Ein weiterer Aspekt der Erfindung betrifft eine Verpackung umfassend die vorstehend beschriebene, erfindungsgemäße, thermogeformte Verpackungsmulde.

In einer bevorzugten Ausführungsform ist die erfindungsgemäße Verpackungsmulde mit einer Deckelfolie versiegelt, und der aus Verpackungsmulde und Deckelfolie gebildete Innenraum der Verpackung weist einen Unterdruck auf. Vorzugsweise beträgt der Druck im Innenraum weniger als 20 mbar, bevorzugter weniger als 15 mbar, noch bevorzugter weniger als 10 mbar und am bevorzugtesten weniger als 5 mbar.

In einer bevorzugten Ausführungsform wird dieser Druck für einen Zeitraum von wenigstens 12 Monaten, bevorzugter wenigstens 18 Monaten und insbesondere wenigstens 24 Monaten aufrechterhalten, d.h. die Druckveränderung in diesem Zeitraum beträgt weniger als 5%.

Bevorzugt ist die Deckelfolie metallisiert. Geeignete Methoden zur Metallisierung von Kunststofffolien sind dem Fachmann bekannt. Im Wege der Metallisierung wird nur ein vergleichsweise dünner Metallfilm auf die Schicht aufgebracht, dessen Dicke bevorzugt im Bereich von 5 bis 100 nm, bevorzugter 10 bis 50 nm liegt. Derartige metallisierte Folien können durch Plasma-Beschichtung hergestellt werden.

Zur Metallisierung sind verschiedene Metalle oder deren Mischungen geeignet. Erfindungsgemäß bevorzugt ist die Deckelfolie mehrschichtig und zumindest eine Schicht ist mit Aluminium oder Kupfer metallisiert, wobei Aluminium besonders bevorzugt ist.

In einer bevorzugten Ausführungsform umfasst die Deckelfolie mehrere Schichten, von denen zumindest eine auf einem Polyester, Copolyester oder deren Mischung basiert.

Polyester und Copolyester im Sinne der Beschreibung sind bevorzugt ausgewählt aus der Gruppe bestehend aus PET (insbesondere c-PET oder a-PET), CoPET, PBT und CoPBT. Mit "PET" wird Polyethylenterephthalat bezeichnet, welches aus Ethylenglykol und Terephthalsäure hergestellt werden kann. Ferner kann zwischen amorphem PET (a-PET) und kristallinem PET (c-PET) unterschieden werden. Mit "CoPET" werden Copolyester bezeichnet, die neben Ethylenglykol und Terephthalsäure noch weitere Monomere, wie z.B. verzweigte oder aromatische Diol-Glykole enthalten. Mit "PBT" wird Polybutylenterephthalat und mit "CoPBT" ein Copolyester des Polybutylenterephthalats bezeichnet. PBT kann aus Butan-1,4-diol und Terephthalsäure hergestellt werden. Bevorzugt weist der Polyester oder Copolyester eine intrinsische Viskosität von 0,1 bis 2,0 dl/g, bevorzugter 0,2 bis 1,7 dl/g, noch bevorzugter 0,3 bis 1,5 dl/g, am bevorzugtesten 0,4 bis 1,2 dl/g und insbesondere 0,6 bis 1,0 dl/g auf. Methoden zur Bestimmung der intrinsischen Viskosität sind dem Fachmann bekannt. Eine ausführliche Beschreibung von PET, PBT, Polycarbonaten (PC) und Copolycarbonaten (CoPC) findet man im Kunststoffhandbuch Band 3/1 - technische Thermoplaste: Polycarbonate, Polyacetale, Polyester, Celluloseester; Carl Hanser Verlag, 1992, auf dessen Inhalt vollumfänglich Bezug genommen wird.

Besonders bevorzugt umfasst die Deckelfolie vier Schichten, von denen drei Schichten metallisiert sind. Die Schichten können mit Hilfe geeigneter Kaschierklebstoffe miteinander verbunden sein. Dabei basieren vorzugsweise zwei Schichten auf einem Polyester bzw. Copolyester und die anderen beiden Schichten auf einem Polyolefin oder Olefin-Copolymerisat. Besonders bevorzugt umfasst die Deckelfolie eine heißsiegelbare Schicht basierend auf PE, eine metallisierte Schicht basierend auf PET, eine metallisierte Schicht basierend auf biaxial orientiertem PP (BOPP) und eine metallisierte Schicht basierend auf PET, vorzugsweise in dieser Schichtabfolge. Die Anordnung der metallisierten Flächen (m) innerhalb der Deckelfolie entspricht bevorzugt folgender schematisierter Darstellung: PE/PET-m/BOPP-m/m-PET, d.h. die beiden auf die PE-Schicht folgenden Schichten basierend auf PET und auf BOPP sind bevorzugt auf ihrer der PE-Schicht abgewandten Seite metallisiert und die andere Schicht basierend auf PET ist bevorzugt auf ihrer der PE-Schicht zugewandten Seite metallisiert.

In einer besonders bevorzugten Ausführungsform weist die Deckelfolie eine Durchstichfestigkeit bestimmt gemäß ASTM F 1306 von wenigstens 30 N, bevorzugter wenigstens 35 N, noch bevorzugter wenigstens 40 N, am bevorzugtesten wenigstens 45 N und insbesondere wenigstens 50 N auf. Dabei beträgt die Schädigungsverformung vorzugsweise mindestens 2 mm, bevorzugter mindestens 5 mm und insbesondere mindestens 8 mm.

Vorzugsweise ist die erfindungsgemäße Verpackungsmulde mit der Deckelfolie versiegelt. Dazu basiert vorzugsweise die heißsiegelbare Schicht der Verpackungsmulde auf demselben Polymer wie die heißsiegelbare Schicht der Deckelfolie oder einem zumindest chemisch verwandten Polymer. Die Heißsiegelung der Deckelfolie auf die Verpackungsmulde kann mit Hilfe herkömmlicher Siegelapparaturen bei den üblichen Temperaturen erfolgen.

Ein weiterer Aspekt der Erfindung betrifft einen Transportbehälter umfassend die vorstehend beschriebene erfindungsgemäße Verpackung. Bevorzugt ist der erfindungsgemäße Transportbehälter mit einer Kühlvorrichtung ausgerüstet, von der die erfindungsgemäße Verpackung ein Bestandteil ist. Vorzugsweise basiert das Kühlprinzip auf der Verdampfung einer Flüssigkeit bei vermindertem Druck. Bevorzugt ist der Transportbehälter nach außen thermisch isoliert und weist einen Hohlraum auf, in welchen ein zu transportierendes, vorzugsweise wärmeempfindliches Verpackungsgut eingebracht werden kann. Insbesondere bevorzugt handelt es sich um einen selbstkühlenden Transportbehälter, wie er beispielsweise in US 6,584,797, US 6,688,132 oder US 6,701,724 beschrieben ist.

Die nachfolgenden Beispiele dienen der näheren Erläuterung der Erfindung, sind jedoch nicht einschränkend hinsichtlich ihres Umfangs auszulegen:

Beispiel 1:

Es wurde durch Coextrusion ein Mehrschichtenverbund folgenden Aufbaus hergestellt: PE1/H/PA/ EVOH/PA/H/PE2. Unmittelbar nach der Coextrusion wurde der Mehrschichtenverbund auf einer Seite mit einem Mehrschichtenverbund derselben Art zusammengefügt, so dass eine Mehrschichtfolie des folgenden Aufbaus hergestellt wurde:

$$\text{PE1/H/PA/EVOH/PA/H/PE2/(EVA-EVA)/PE2/H/PA/EVOH/PA/H/PE1}$$

PE1: 35 $\mu$m
PE2: 20 $\mu$m
PA: 10 $\mu$m
EVOH: 15 $\mu$m
H: 5 $\mu$m
EVA: 2,5 $\mu$m

Beispiel 2:

Analog zu Beispiel 1 wurde eine Mehrschichtenverbund hergestellt, welcher jedoch nicht mit einem zweiten Mehrschichtenverbund derselben Art zusammengefügt wurde. Somit erfolgte keine Aufteilung der funktionellen Barriereschicht (EVOH) auf mehrere Schichten und der Mehrschichtenverbund entsprach bereits der fertigen Mehrschichtfolie folgenden Schichtaufbaus:

## PE/H/PA/EVOH/PA/H/PE

PE: 60 $\mu$m
H: 5 $\mu$m
PA: 20 $\mu$m
EVOH: 30 $\mu$m

Beispiel 3:

Die Mehrschichtfolie aus Beispiel 1 wurde gegen eine zusätzliche PE-Folie (PE3) kaschiert. Man erhielt eine Mehrschichtfolie folgenden Aufbaus:

## PE1/H/PA/EVOH/PA/H/PE2/(EVA-EVA)/PE2/H/PA/EVOH/PA/H/PE1/PE3

PE3: 150 $\mu$m
Die zusätzliche PE-Folie wurde zur Erniedrigung der Wasserdampfpermeation gegen den Verbund aus Beispiel 1 kaschiert. Hierdurch wurde zum einen durch diese PE-Schicht (Stärke mindestens 150 $\mu$m) eine weitere mechanische Schutzschicht für das EVOH erreicht, und zum anderen wurde der tiefgezogenen Folie zusätzliche Stabilität verliehen. Die PE-Schicht wird vorzugsweise auf der Seite aufkaschiert, von der eine erhöhte mechanische äußere Krafteinwirkung zu erwarten ist.

Beispiel 4:

Die Mehrschichtfolie von Beispiel 1 wurde auf beiden Seiten mit jeweils einer zusätzlichen PE-Schicht (PE4) kaschiert. Man erhielt eine Mehrschichtfolie folgenden Aufbaus:

## PE4/PE1/H/PA/EVOH/PA/H/PE2/(EVA-EVA)/PE2/H/PA/EVOH/PA/H/PE1/PE4

PE4: 75 $\mu$m
Die beiden zusätzlichen PE-Schichten erniedrigen zum einen die Wasserdampfpermeation und erhöhen zum anderen auch die Widerstandskraft gegen mechanische Einflüsse sowohl von innen wie auch von außen.

**Patentansprüche**

1.  Thermoformbare Mehrschichtfolie umfassend mindestens eine Polyolefinschicht basierend auf einem thermoplastischen Polyolefin, Olefin-Copolymerisat oder deren Mischung und mindestens eine Gasbarriereschicht, wobei die Sauerstoffdurchlässigkeit der Mehrschichtfolie höchstens 0,5 cm$^3$ m$^{-2}$ d$^{-1}$ bar$^{-1}$ beträgt.

2.  Mehrschichtfolie nach Anspruch 1, **dadurch gekennzeichnet, dass** sie

    - n Gasbarriereschichten $B_i$ mit i = 1 bis n; und
    - n+1 Polyolefinschichten $P_i$ mit i = 1 bis n+1 umfasst,

    wobei

    - n = 1, 2, 3, 4 oder 5;
    - die Polyolefinschichten jeweils gleich oder verschieden auf einem thermoplastischen Polyolefin, Olefin-Copolymerisat oder deren Mischung basieren; und
    - bei gegebenem i die Gasbarriereschicht $B_i$ zwischen den Polyolefinschichten $P_i$ und $P_{i+1}$ angeordnet ist.

**3.** Mehrschichtfolie nach Anspruch 1 oder 2, **dadurch gekennzeichnet, dass** die Gasbarriereschicht(en) jeweils gleich oder verschieden auf Ethylen-Vinylalkohol-Copolymerisat basieren.

**4.** Mehrschichtfolie nach Anspruch 2 oder 3, **dadurch gekennzeichnet, dass** n > 1,
wobei

- die Summe der Schichtdicken der Gasbarriereschichten mindestens 20 $\mu$m beträgt; und/oder
- bei gegebenem i die Schichtdicke der Gasbarriereschicht $B_i$ um höchstens 5 $\mu$m von der Schichtdicke der Gasbarriereschicht $B_{i+1}$ abweicht.

**5.** Mehrschichtfolie nach einem der Ansprüche 2 bis 4, **dadurch gekennzeichnet, dass** sie eine Schutzschicht **S** aufweist, welche zumindest eine der beiden Oberflächenschichten der Mehrschichtfolie bildet, wobei die Schutzschicht **S**

- auf einem thermoplastischen Polyolefin, Olefin-Copolymerisat oder deren Mischung basiert; und/oder
- eine Schichtdicke von mindestens 100 $\mu$m aufweist; und/oder
- einen Füllstoff enthält.

**6.** Mehrschichtfolie nach einem der Ansprüche 2 bis 5, **dadurch gekennzeichnet, dass** die Polyolefinschicht $P_1$ oder die Polyolefinschicht $P_{n+1}$ eine Oberflächenschicht der Mehrschichtfolie bildet und ggf. heißsiegelbar ist.

**7.** Mehrschichtfolie nach einem der Ansprüche 2 bis 6, **dadurch gekennzeichnet, dass** sie n Zwischenschichten $Z_i$ mit i = 1 bis n und n Zwischenschichten $Z_i'$ mit i = 1 bis n umfasst, wobei bei gegebenem i die Gasbarriereschicht $B_i$ auf ihrer der Polyolefinschicht $P_i$ zugewandten Seite unmittelbar an die Zwischenschicht $Z_i$ und auf ihrer der Polyolefinschicht $P_{i+1}$ zugewandten Seite unmittelbar an die Zwischenschicht $Z_i'$ angrenzt.

**8.** Mehrschichtfolie nach Anspruch 7, **dadurch gekennzeichnet, dass** die Zwischenschichten jeweils gleich oder verschieden auf einem Polyamid, Copolyamid oder deren Mischung basieren.

**9.** Mehrschichtfolie nach Anspruch 7 oder 8, **dadurch gekennzeichnet, dass** bei gegebenem i das Verhältnis der Schichtdicke der Zwischenschicht $Z_i$ und/oder der Zwischenschicht $Z_i'$ zur Schichtdicke der Gasbarriereschicht $B_i$ jeweils im Bereich von 3:1 bis 1:7 liegt.

**10.** Mehrschichtfolie nach einem der Ansprüche 7 bis 9, **dadurch gekennzeichnet, dass** sie n Haftvermittlerschichten $H_i$ mit i = 1 bis n und n Haftvermittlerschichten $H_i'$ mit i = 1 bis n umfasst, wobei bei gegebenem i die Haftvermittlerschicht $H_i$ zwischen der Polyolefinschicht $P_i$ und der Zwischenschicht $Z_i$ und die Haftvermittlerschicht $H_i'$ zwischen der Zwischenschicht $Z_i'$ und der Polyolefinschicht $P_{i+1}$ angeordnet ist.

**11.** Mehrschichtfolie nach einem der vorstehenden Ansprüche, **dadurch gekennzeichnet, dass** nach Thermoformung durch Tiefziehen bei einem Tiefziehverhältnis von 1 : 3 die Sauerstoffdurchlässigkeit in den tiefgezogenen Bereichen um höchstens 25% größer als in den nicht-tiefgezogenen Bereichen ist.

**12.** Mehrschichtfolie nach einem der vorstehenden Ansprüche, **dadurch gekennzeichnet, dass** sie eine Gesamtschichtdicke von mindestens 150 $\mu$m aufweist.

**13.** Verpackungsmulde umfassend eine thermogeformte Mehrschichtfolie nach einem der Ansprüche 1 bis 12.

**14.** Verpackungsmulde nach Anspruch 13, **dadurch gekennzeichnet, dass** sie sowohl in den thermogeformten Bereichen als auch in den nicht-thermogeformten Bereichen eine Sauerstoffdurchlässigkeit von höchstens 0,5 $cm^3$ $m^{-2}$ $d^{-1}$ $bar^{-1}$ aufweist.

**15.** Verpackung umfassend eine Verpackungsmulde nach Anspruch 13 oder 14.

**16.** Verpackung nach Anspruch 15, **dadurch gekennzeichnet, dass** die Verpackungsmulde mit einer Deckelfolie versiegelt ist und der aus Verpackungsmulde und Deckelfolie gebildete Innenraum der Verpackung einen Unterdruck aufweist.

**17.** Verpackung nach Anspruch 16, **dadurch gekennzeichnet, dass** die Deckelfolie metallisiert ist.

18. Verpackung nach Anspruch 16 oder 17, **dadurch gekennzeichnet, dass** die Deckelfolie mehrere Schichten umfasst, von denen zumindest eine auf einem Polyester, Copolyester oder deren Mischung basiert.

19. Transportbehälter umfassend eine Verpackung nach einem der Ansprüche 15 bis 18.

**Europäisches Patentamt**

# EUROPÄISCHER RECHERCHENBERICHT

Nummer der Anmeldung

EP 06 02 0983

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 198 30 975 A1 (WOLFF WALSRODE AG [DE]) 13. Januar 2000 (2000-01-13) | 1-8,10, 12,13, 15,18 | INV. B32B27/00 B32B27/32 B65D65/40 |
| A | * Seite 4, Zeilen 7-16,47-52; Ansprüche 1-8,11-13; Tabelle 2 * | 9,11 | |
| X | DE 199 15 311 A1 (BAYER AG [DE]; WOLFF WALSRODE AG [DE]) 5. Oktober 2000 (2000-10-05) * Beispiele A-E; Tabelle 1 * | 1,2,6,7, 9,12 | |
| X | * Ansprüche 1,2,4; Beispiel e; Tabelle 1 * | 2 | |
| D,X | EP 1 157 823 A (WOLFF WALSRODE AG [DE] WIPAK WALSRODE GMBH & CO KG [DE]) 28. November 2001 (2001-11-28) * Spalte 2, Zeilen 11-18, Absätze 7,10,12,13,15-17 - Spalte 3, Zeilen 10-20; Ansprüche 1,2,5,6,9; Beispiele D,E * | 1,3,6,8, 10 | |
| D,X | EP 1 190 845 A (WIPAK WALSRODE GMBH & CO KG [DE]) 27. März 2002 (2002-03-27) * Absätze [0011], [0014], [0016] - [0018]; Ansprüche 1,3,5-7,10,11; Beispiele C,H * | 1,3,6,8, 10 | RECHERCHIERTE SACHGEBIETE (IPC) B32B B65D |
| X | EP 1 157 824 A2 (WOLFF WALSRODE AG [DE] WIPAK WALSRODE GMBH & CO KG [DE]) 28. November 2001 (2001-11-28) * Spalte 3, Zeilen 15-18, Absätze 7-9,11,12,15-17; Ansprüche 1,4,5,7,10; Beispiele C,H * | 1,3,6,8, 10 | |
| X | US 6 194 042 B1 (FINKELSTEIN HARVEY [US] ET AL) 27. Februar 2001 (2001-02-27) * Spalte 4, Zeile 60; Ansprüche 1,5-8; Abbildungen 1,2,5 * | 1,3,6,10 | |

Der vorliegende Recherchenbericht wurde für alle Patentansprüche erstellt

| Recherchenort | Abschlußdatum der Recherche | Prüfer |
|---|---|---|
| Den Haag | 27. Juni 2007 | Derz, Thomas |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 02 0983

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-06-2007

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE 19830975 | A1 | | 13-01-2000 | AT | 265930 | T | 15-05-2004 |
| | | | | AU | 4616299 | A | 01-02-2000 |
| | | | | CA | 2336747 | A1 | 20-01-2000 |
| | | | | DK | 1098764 | T3 | 30-08-2004 |
| | | | | WO | 0002725 | A1 | 20-01-2000 |
| | | | | EP | 1098764 | A1 | 16-05-2001 |
| | | | | ES | 2221394 | T3 | 16-12-2004 |
| | | | | JP | 2002520189 | T | 09-07-2002 |
| | | | | US | 6582828 | B1 | 24-06-2003 |
| DE 19915311 | A1 | | 05-10-2000 | AU | 3292100 | A | 23-10-2000 |
| | | | | BR | 0009545 | A | 26-12-2001 |
| | | | | CA | 2367996 | A1 | 12-10-2000 |
| | | | | CN | 1345394 | A | 17-04-2002 |
| | | | | WO | 0060184 | A1 | 12-10-2000 |
| | | | | EP | 1169525 | A1 | 09-01-2002 |
| | | | | HU | 0200652 | A2 | 29-07-2002 |
| | | | | JP | 2002541393 | T | 03-12-2002 |
| | | | | MX | PA01009946 | A | 24-04-2002 |
| | | | | PL | 350763 | A1 | 27-01-2003 |
| | | | | TR | 200102830 | T2 | 21-03-2002 |
| EP 1157823 | A | | 28-11-2001 | AR | 028599 | A1 | 14-05-2003 |
| | | | | AU | 4621001 | A | 29-11-2001 |
| | | | | BR | 0102062 | A | 18-12-2001 |
| | | | | CA | 2348185 | A1 | 22-11-2001 |
| | | | | CZ | 20011774 | A3 | 13-02-2002 |
| | | | | DE | 10025305 | A1 | 06-12-2001 |
| | | | | HU | 0102145 | A2 | 28-04-2004 |
| | | | | JP | 2002019014 | A | 22-01-2002 |
| | | | | MX | PA01005085 | A | 10-09-2003 |
| | | | | NO | 20012485 | A | 23-11-2001 |
| | | | | PL | 347623 | A1 | 03-12-2001 |
| | | | | SK | 6972001 | A3 | 03-12-2001 |
| | | | | US | 2001049014 | A1 | 06-12-2001 |
| | | | | ZA | 200103477 | A | 22-11-2001 |
| EP 1190845 | A | | 27-03-2002 | AR | 030769 | A1 | 03-09-2003 |
| | | | | AU | 6710001 | A | 28-03-2002 |
| | | | | BR | 0104171 | A | 23-07-2002 |
| | | | | CA | 2357203 | A1 | 22-03-2002 |
| | | | | DE | 10047043 | A1 | 11-04-2002 |
| | | | | HU | 0103644 | A2 | 28-04-2004 |
| | | | | JP | 2002172727 | A | 18-06-2002 |
| | | | | NO | 20014369 | A | 25-03-2002 |
| | | | | NZ | 514285 | A | 28-02-2003 |

Für nähere Einzelheiten zu diesem Anhang : siehe Amtsblatt des Europäischen Patentamts, Nr.12/82

EPO FORM P0461

**ANHANG ZUM EUROPÄISCHEN RECHERCHENBERICHT**
**ÜBER DIE EUROPÄISCHE PATENTANMELDUNG NR.**                    EP 06 02 0983

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-06-2007

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 1190845 | A | | | PL | 349800 | A1 | 25-03-2002 |
| | | | | US | 2002090522 | A1 | 11-07-2002 |
| | | | | ZA | 200107819 | A | 17-05-2002 |
| EP 1157824 | A2 | 28-11-2001 | | AR | 029524 | A1 | 02-07-2003 |
| | | | | AT | 337174 | T | 15-09-2006 |
| | | | | AU | 774494 | B2 | 01-07-2004 |
| | | | | AU | 4620901 | A | 29-11-2001 |
| | | | | BR | 0102045 | A | 02-01-2002 |
| | | | | CA | 2348184 | A1 | 22-11-2001 |
| | | | | CZ | 20011775 | A3 | 16-01-2002 |
| | | | | DE | 10025321 | A1 | 10-01-2002 |
| | | | | HR | 20010386 | A2 | 31-12-2002 |
| | | | | HU | 0102147 | A2 | 29-04-2002 |
| | | | | JP | 2002019022 | A | 22-01-2002 |
| | | | | MX | PA01005118 | A | 06-08-2002 |
| | | | | NO | 20012486 | A | 23-11-2001 |
| | | | | NZ | 511806 | A | 25-10-2002 |
| | | | | PL | 347624 | A1 | 03-12-2001 |
| | | | | SK | 6982001 | A3 | 03-12-2001 |
| | | | | US | 2002018891 | A1 | 14-02-2002 |
| | | | | ZA | 200103476 | A | 22-11-2001 |
| US 6194042 | B1 | 27-02-2001 | | AT | 325047 | T | 15-06-2006 |
| | | | | AU | 8271198 | A | 08-02-1999 |
| | | | | CA | 2295299 | A1 | 21-01-1999 |
| | | | | DE | 69834405 | T2 | 23-11-2006 |
| | | | | EP | 1007427 | A1 | 14-06-2000 |
| | | | | ES | 2264205 | T3 | 16-12-2006 |
| | | | | PT | 1007427 | T | 31-08-2006 |
| | | | | US | 6139931 | A | 31-10-2000 |
| | | | | WO | 9902419 | A1 | 21-01-1999 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6584797 B
- US 6688132 B
- US 6701724 B
- DE 10025305 A
- DE 10047043 A

**In der Beschreibung aufgeführte Nicht-Patentliteratur**

- **HERNANDEZ ; SELKE ; CULTER.** Plastics Packaging. Carl Hanser Verlag, 2000
- Kunststoff-Handbuch. Carl Hanser Verlag, 1966, vol. VI
- **MELVIN I. KOHAN.** Nylon Plastics Handbook. Carl Hanser Verlag, 1995
- **A.L. BRODY ; K.S. MARSH.** The Wiley Encyclopedia of Packaging Technology. Wiley-Interscience, 1997
- **W. SOROKA.** Fumdamentals of Packaging Technology. Institute of Packaging Professionals, 1995
- **J. NENTWIG.** Kunststoff-Folien. Hanser Fachbuch, 2000
- **S.E.M. SELKE.** Understanding Plastics Packaging Technology. Hanser Gardner Publications, 1997
- Thermoplaste: Polycarbonate, Polyacetale, Polyester, Celluloseester. Carl Hanser Verlag, 1992, vol. 3/1